# EUROPEAN PATENT APPLICATION

(11) **EP 2 993 447 A1**
(43) Date of publication of application: **09.03.2016**
(21) Application number: 14003059.4
(22) Date of filing: 04.09.2014
(51) Int. Cl.: G01F 11/04, G01F 11/06

(54) **Liquid dosing device**

(71) Applicant: Aptar Freyung GmbH, 94078 Freyung (DE)
(72) Inventor: Jäckel, Gerhard F.K., D-94078 Freyung (DE); Graswald, Martin, D-94034 Passau (DE)
(74) Representative: Schmid, Nils T.F.

(57) **Abstract**

A liquid dosing device (1, 101) for dispensing a metered dose of liquid from a squeezable container, comprises a discharge outlet (5); a dosing chamber (7) behind the discharge outlet (5), having at least one charge opening (9, 9') allowing a charging flow of liquid from said container into said dosing chamber (7) under influence of weight of liquid, and a drive opening (8) allowing a control flow of liquid from said container into said dosing chamber in response on a rise of pressure of; a floating plunger (6) moveably arranged in the dosing chamber (7) so as to advance upon said rise of pressure from a rest position in which under influence of a lifting force of buoyancy said floating plunger (6) closes said drive opening (8), into a blocking position in which said floating plunger (6) closes said at least one charge opening (9, 9'), and to push said liquid charged to said dosing chamber (7) to said discharge outlet (5); and a blocking valve (50) arranged between said discharge outlet (5) and said at least one charge opening (9, 9') in front of the dosing chamber (7).

## Description

The present invention relates to a liquid dosing device by which a controlled, metered dose of liquid can be repeatedly dispensed. A preferred field of use of said liquid dosing device is domestic or household use, or containers for detergents for cleaning, fabric conditioners or the like. Other fields of use include dosing apparatuses for manual and automatic dishwashing liquids, hair-care products, skin products, care applications, liquid medications, such as cough syrup, food, such as sauces or syrups, and the like.

A liquid dosing device is particularly known from WO 2005/049477 A2, which is to be improved by the present invention. Particularly, the known liquid dosing device has an outlet passage leading to a front discharge opening, past or around a control or dosing chamber positioned behind the front discharge opening. Said dosing chamber comprises at least one charge opening or rear control opening allowing a restricted charge flow of liquid from the container interior into the dosing chamber. Further, the known liquid dosing device comprises a plunger or a sliding piston in the dosing chamber which is adapted to advance during dispensing, under the influence of liquid flowing into the control chamber behind the sliding piston through the charge opening. When the sliding piston has advanced to a blocking or end position in which dosing is terminated and the outlet passage is closed.

The outlet path of liquid leads from the container interior forwardly, past the outside of the dosing chamber and then radially inward through the charge opening in front of the sliding piston.

In order to control said advancing of the sliding piston to the discharge outlet, a dump valve arrangement is provided at the back to the dosing chamber to allow liquid to escape more rapidly from the control chamber behind the sliding piston after a dose has been dispensed. The liquid is able to enter the dosing chamber during dispensing via the control opening. The dump valve comprises a dump valve seat and a dump valve member entering the dump valve seat to seal in a closed condition the dump valve. The closed condition is generated when the valve member is forced to the valve seat under the influence of the pressure rise in the liquid by squeezing the container. In order to bring the sliding piston back into its rest position, the container is to be turned upright and the squeeze is to be released. Under gravity of the liquid and the sliding piston, the last finds back its rest position. Even if the squeezed container exerts a sufficiently powerful suction, it may be possible to restore the control piston to its end position without having to bring the container into the upright position.

However, the known dosing device has disadvantages in that the restoring action heavily depends on the upright position of the container and further, said dump valve arrangement introduces an increased number of parts. Further, it turns out that the sliding piston often jams within the dosing chamber due to residues accumulating and drying up close to the dosing chamber, which might affect the consistency of the dosing action.

A further differential measuring device is known from US 2011/0277857 A1. In one of the embodiments of US 2011/0277857 A1 a floating valve is provided which can open and close the discharge outlet and the control or drive opening. The measuring function is achieved by a liquid flow exiting the discharge outlet as long as the valve is not in the closing or end position. During the travel of the valve from the rest position to the end position, a liquid bypasses the valve and finally is discharged.

However, it turned out that the measuring function cannot be achieved if the pressure applied to the squeezable container generates a pressure difference on the valve which is equilibrated with the lifting buoyancy force. In this operation situation, a continued outflow of the metered device is realized.

EP 2 444 782 A1 discloses an apparatus and means for repeatedly dispensing controlled doses of liquid. The structure of this known liquid dosing device is similar to the above-mentioned one of WO 2005/049477 A1. The disadvantages identified for the liquid dosing device according to WO 2005/049477 A1 shall be overcome by an improved drainage of the dosing chamber. A ratio of total surface of said charge opening and said control opening shall be provided by keeping the dump valve arrangement still having the disadvantages as identified above.

It is an object of the invention to provide a liquid dosing device for dispensing a metered dose of liquid from a squeezable container which overcomes the above-mentioned disadvantages particularly has an well-functioning measuring function even if the container is preferably stored in an upturned position so that the liquid is forced to the liquid dosing device even under the influence of buoyancy on the dosing device while particularly the consistency of metering is improved.

This object is solved by the subject matter of claim 1. The liquid dosing device according to the invention comprises a discharge outlet and a dosing chamber having at least one charge opening allowing a charging flow of liquid from said container into said dosing chamber under influence on weight of liquid, if the container is upturned. Further, the dosing chamber comprises a drive opening allowing a control flow of liquid from the interior of said container into said dosing chamber in response of a rise of pressure of liquid by squeezing the container. It should be clear that the charging flow of liquid may be driven additionally by pressure forces acting on the liquid. In a preferred embodiment the charging flow into the dosing chamber is caused exclusively by the influence of gravity on the liquid.

A floating plunger is positioned between the at least one front charge opening and the drive opening such that the floating plunger separates a front metering compartment of the dosing chamber and a rear actuating compartment. The access to the measuring compartment is realized by the at least one charge opening, the access to the actuation compartment of the dosing chamber being realized by the drive opening. Said floating plunger is movably arranged in the dosing chamber so as in advance upon said rise of pressure from a rest position into a blocking position in order to push said liquid charge to the said dosing chamber, particularly to the metering compartment, to said discharge outlet. Further, a blocking valve is arranged between said discharge outlet and said at least one charge opening in front of the dosing chamber. It turned out that the liquid dosing device according to the invention overcomes all of the disadvantages mentioned above. The liquid dosing device is very easy to manufacture and does not comprise except of the plunger movable elements which could jam. Further, because of the interaction between the blocking valve and the floating plunger, the operational disadvantage of having a piston or plunger equilibrated within the dosing chamber is excluded. The operating person has to squeeze the container in order to overcome the opening resistance of the blocking valve in order to start the discharging process. Therefore, as the operating person increases the pressure, the pressure is abruptly released as soon as the blocking valve opens. The operating person will not immediately release the squeezing action, rather continues which gives enough pressure in order to move the plunger from its rest position to its end position. Further, the blocking position even keeps the liquid dosing device tight if the container is positioned into an upturned position.

It should be understood that the floating plunger closes the at least one charge opening at least to such an extent that no liquid passes from the at least one charge opening to the discharge outlet. To this end, the floating plunger does not have to seal the charge opening completely because also the passageway through the valve is blocked by the floating plunger. However, the plunger closes the charge opening at least in such a way that the amount of liquid that potentially enters the dosing chamber over a reasonable time of use (e.g. 2 to 15 seconds, preferably less than 180 seconds or 60 seconds) does not exceed an amount that would move the floating plunger from its blocking position or allow liquid to flow out. In a preferred embodiment, the floating plunger sealingly closes the at least one charge opening particularly to such an extent that the sealing closure resists any common manually or mechanically generated squeezing pressure applied to the container, particularly up to 300 N, up to 500 N or up to 1000 N squeezing force.

In a preferred embodiment the blocking valve withstands a first pressure up to an opening pressure resistance and opens for a liquid passage if the liquid pressure exceeds said opening pressure resistance constituted by said blocking valve. Preferably said opening pressure resistance is assessed such that it is larger than the liquid pressure acting on the blocking valve if the container is in an upright position and the container is totally filled with liquid. As the liquid passage opens only if a specific pressure threshold is exceeded, the squeezing pressure is sufficiently high to reliably move the floating plunger towards the blocking position in a single particularly continuous uninterrupted stroke. Thereby it is assured that an exactly metered dose is discharged and erroneous metering due to an interrupted or delayed movement of the floating plunger is avoided. Adjusting the opening pressure to be larger than the liquid pressure in the container in an upright position assures that no liquid leaves unwanted the container independently from its orientation. Upright position is to be understood in this context as meaning that gravity acts on the contents of the container in a direction towards the discharge outlet and the blocking valve.

In a preferred embodiment the liquid pressure exceeding said opening pressure resistance is achieved by particularly manually squeezing the container. The liquid dosing device may be implemented in any automatic or electrically operated dispensing device without changes to its functional principle.

In a preferred embodiment said blocking valve is elastically biased to close its aperture. Particularly, the blocking valve is a dome-shaped thin walled elastic member. Particularly, the elastic member is a silicone membrane. Preferably, the blocking valve aperture is provided by the dome-shaped elastic member forming at least three, preferably four, particularly separately movable dome segments. Each segment swivels elastically towards the center of the dome and back relative to a swivel axis defined by a circular base ring of the dome shape. By the swivelling motion of the segments the dome-shaped member opens its central aperture. The dome segments return to the original dome-shaped formation as soon as pressure on the blocking valve is released.

In a preferred embodiment the floating plunger has a hollow body formed by two bushing-like elements telescopically inserted one into another to confine a tight volume. The interior of the floating body formed by the two bushing-like elements may be filled with air, a specific gas and/or material. The floating plunger and its filling, if applicable, is adapted to provide an overall density that is lower than the density of the liquid such that buoyance forces lift the floating plunger within the liquid. The buoyance forces acting on the floating plunger cause the plunger to move immediately upwards into its initial position after squeezing pressure is released.

In a preferred embodiment the dosing chamber has a cylindrical dosing interior, wherein the plunger is adapted to the cylindrical dimension of the dosing interior such that the plunger has a clearance in radial direction with the cylindrical dosing interior of the dosing chamber. Thus, jamming of the floating plunger within the dosing chamber is reliably avoided. Moreover, a sliding movement of the floating plunger within the dosing chamber is facilitated by the liquid in the dosing chamber working as a lubricant between the cylindrical side walls of the dosing chamber and the sliding outer surfaces of the floating plunger. The amount of liquid that potentially bypasses the floating plunger is negligibly small so that the formation of a pressure gradient between the lower part of the dosing chamber and the upper part of the dosing chamber remains essentially unaffected when squeezing the container.

Preferably the plunger comprises an upstream rim and downstream rim interconnected by a preferably cylindrical body portion, the downstream rim being proximate to the at least one charge opening and the upstream rim being positioned proximate to the drive opening. Particularly each of the bushing like elements comprises a cylindrical body portion and a rim, wherein the cylindrical body portions are adapted to fluid tightly fit into each other. Particularly, the upstream rim is formed quadratic and the corner portions are curved according to the cylindricity of the cylindrical dosing interior of the dosing chamber.

Preferably the downstream rim is thicker than the upstream rim and/or is totally cylindrically formed in accordance to the cylindricity of the cylindrical dosing interior of the dosing chamber. Particularly, both rims extend radially beyond the interconnecting body portion. Preferably the upstream rim, the downstream rim and the body portion define a ring-shaped chamber. The ring-shaped chamber is fillable with liquid via the charge opening if the floating plunger is in its blocking position. By providing the downstream rim with a greater protruding portion compared to the upstream rim, closing forces acting on the blocking valve and the discharge outlet from the downstream rim of the plunger are uniformly distributed, thereby assuring tight sealing. Moreover, the liquid in the ring-shaped chamber provides initial buoyance forces that are responsible for lifting the floating plunger immediately upwards and allowing to close the blocking valve as soon as the squeezing pressure is released.

In a preferred embodiment the dosing chamber is manufactured of one plastic element or comprises two cylindrical bushing elements which are telescopically slidable within each other in order to adjust the interior volume of the dosing chamber. By providing a dosing chamber and/or the floating plunger with telescopically adaptable volumes, respectively, the liquid dosing device is easily adaptable to different liquids and different doses. Particularly a gasket is arranged between the overlapping outside and inside of the respective bushing element.

In a preferred embodiment the dosing chamber is formed by a hollow body, particularly manufactured by plastic, which is removably attached to a cap operably connectable to said container. As the dosing chamber is attachable via a retaining lug mechanism or other fixation means to any container cap, the liquid dosing device is universally applicable to different types of containers and container closures.

In a preferred embodiment the discharge outlet and/or the blocking valve are arranged downstream the at least one charge opening such that a discharge flow of the liquid reaches directly particularly along a predominant flow direction the blocking valve and/or the discharge outlet. Preferably, the arrangement of the charge opening relative to the discharge outlet and/or the blocking valve allows a liquid to flow towards the blocking valve and/or discharge outlet free of any flow obstructions. Preferably, the charge opening is located immediately adjacent the blocking valve and/or discharge outlet particularly considering an axial extension of the liquid dosing device. Preferably, the charge opening is located within an area extending up to 20% of the total axial height of the liquid dosing device, taking the discharge outlet or the blocking valve as height reference point. Particularly, the charge opening is within a range of less an area extending to 10% or less or 5% or less of the total axial height. The specific arrangement of the charge opening allows emptying the containing of a container to a higher degree as it is possible with known liquid dosing devices. Preferably, the discharge outlet and/or the blocking valve is particularly completely located downstream and/or axially below the charge opening. Particularly the discharge outlet, the blocking valve and/or the liquid dosing device is free flow obstructions extending from the discharge outlet into the dosing chamber beyond the charge opening at its most downstream position.

In a preferred embodiment, the blocking valve is fixed to the discharge outlet by a clamp ring, wherein the blocking valve and/or the clamp ring extend less than 20%, particularly less than 10%, of the total axial extension of the dosing chamber back into the dosing chamber. Preferably the clamp ring and/or the blocking valve, particularly an axially most inner end relative to the dosing chamber, is axially offset from the charge opening towards the discharge outlet. Preferably the clamp ring and/or the blocking valve is axially offset towards the discharge outlet such that an axial overlap with a mounting portion for a container to be connected to the liquid dosing device and/or the container is less than 20 mm or 10 mm, preferably less than 5 mm, 4mm, 3mm 2mm or 1mm.

One or more features of the invention provide the advantage of improved emptying of resi-dues from the container, exact metering of a dose, reliable functionality of the dosing device and fast reversal of the dosing device in its initial operating state.

Further advantages, features and characteristics of the invention become obvious from the following description of preferred embodiments of the invention, shown in the enclosed drawings according to which
- Fig. 1a to 1c: is a cross sectional view of the liquid dosing device according to the invention and three different operation conditions;
- Fig. 2: is a cross section of the liquid dosing device according to the invention according to a second embodiment;
- Fig. 3: is a perspective view of the liquid dosing device realized in form of a cap with an outside hinged lid in an open condition;
- Fig. 4: is a side view on the liquid dosing device according to Fig. 3; and
- Fig. 5: is a top view of the liquid dosing device according to Figs. 3 and 4.

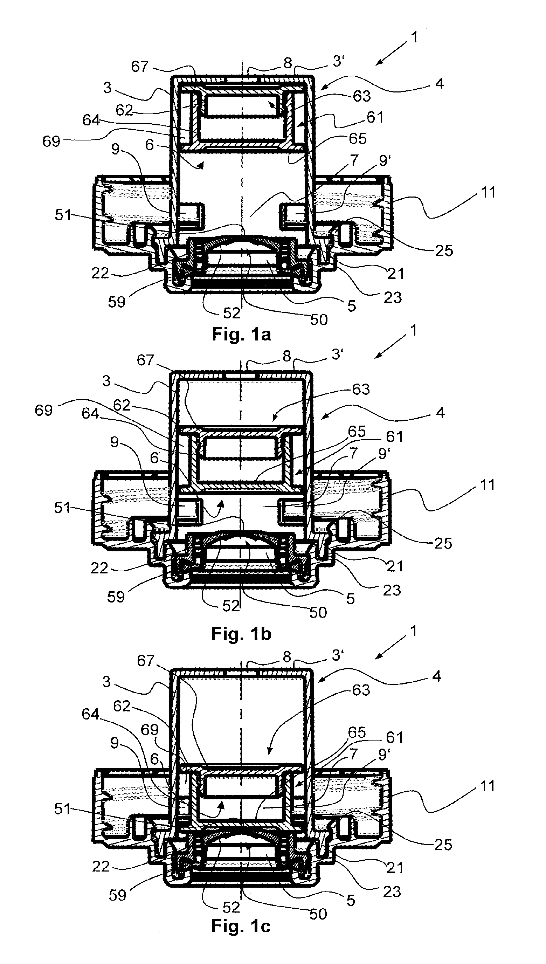

A first embodiment of a liquid dosing device 1 according to the invention is shown in Figs. 1a to 1c. The liquid dosing device 1 is fixed to a threaded base 11 of a cap 10 which is to be installed on a liquid carrying container (not shown). The liquid dosing device 1 comprises a hollow body 4 having an essentially hollow cylindrical sidewall 3 that extends concentrically relative to the threaded base 11 of the cap. The dosing chamber is closed by a base plate 3' on the side that faces the interior of the container. A drive opening 8 is formed as a through hole in the base plate 3' centrically relative to the hollow body 4 and/or the cap base 11. On the opposite side of the base plate 3', which faces the outside of the container, a discharge outlet 5 is formed as one piece with the threaded base 11. The interior of the hollow body 4 forms a dosing chamber 7.

The cylindrical sidewall 3 of the dosing chamber 7 comprises four charge openings 9, 9' defined by cutouts, which are of equal size and circumferentially equally distributed around the cylindrical sidewall 3.

A blocking valve 50 is installed between the dosing chamber 7 and the discharge outlet 5. The blocking valve 50 comprises a valve closure member 52 that is bendable relative to an anchor ring fixed to the cap base 11 to open and close a throughway or aperture 51 from the dosing chamber 7 to the discharge outlet 5.

The dosing chamber 7 comprises a mounting rim 21 which is slidably received within a complementary installment groove 23 formed by the threaded base 11 of the cap 10 and held by a snap tap 25 extending concentrically on the radially outer side from the installment groove 23. The base 11 of the cap defines several ring shaped rims extending axially towards the dosing chamber. The installment groove 23 is defined between two of these rims. The base 11 comprises a further, particularly concentrically most inner rim, which defines the discharge outlet 5. The blocking valve 50 is mounted on the inner rim via a base lip 59 resting on the inner rim. A clamp ring 22 keeps the base lip of the blocking valve 50 into position. The clamp ring 22 is hold by a lug structure formed on a concentrically adjacent rim of the base 11. The clamp ring 22 extends from the discharge outlet 5 into the dosing chamber 7 beyond the blocking valve 50 to form an abutment for the floating plunger 6 in its blocking position. The clamp ring 22 is made by hard plastic to reduce adhesion forces with the floating plunger 6 and allow fast reversal of the floating plunger 6, when the squeezing pressure is released.

A floating plunger 6 is slidably mounted within the dosing chamber 7. The floating plunger 6 has a downstream rim 65, providing a first effective surface, facing the discharge outlet 5 and an upstream rim 67, providing a second effective side, facing the drive opening 8. The upstream and downstream rims 65, 67 have the same maximum diameter being essentially equal to the inner diameter of the dosing chamber 7. While the downstream rim 65 is circular or disc shaped, the upstream rim 67 has a quadratic effective surface with edged rounded complementary relative to the cylindrical sidewall 3 of the dosing chamber 7.

The floating plunger 6 is formed by two mushroom- or double-T-shaped thinwalled bushing elements 61, 63 connected to each other in a telescopically slidable manner. The bushing elements 61, 63 define an essentially cylindrical interior volume of the plunger. The volume is adaptable by either telescopically displacing one bushing 61, 63 from the other or by changing the diameter of the interconnecting cylindrical body portions 62, 64 of the bushings 61, 63. As the upstream and the downstream rims 65, 67 each extend radially beyond the cylindrical body portions 62, 64, respectively, an annulus-shaped chamber 69 is formed between the rims 65, 67, the outer surface of the body portions 62, 64 and the cylindrical side wall 3.

Referring to Fig. 1a, the liquid dosing device 1 is shown in its initial condition in which no liquid pressure apart from atmospheric pressure and the influence of gravity on the liquid is exerted on the floating plunger 6 and blocking valve 50. Liquid stored in the container enters the dosing chamber 7 under the influence of gravity via charge openings 8. As soon as a squeezing force is applied to the container the pressure in the container is increased thereby, the pressure that acts on the upstream rim 67 of the floating plunger 6 via the drive opening 8 increases. At the same time the pressure on the liquid in the dosing chamber 7 and the pressure on the closure element 52 of the blocking valve 50 increases.

The closure element 52 of the blocking valve is adapted to resist a predetermined pressure threshold before opening a passageway for the liquid through the blocking valve 50.

As soon as the squeezing pressure acting on the valve closure element 52 exceeds the blocking valve threshold, the valve 50 opens, thereby decreasing the pressure within the dosing chamber 7. The pressure gradient resulting from high squeezing pressure acting on the upstream rim 67 of the floating plunger 6 and the decreasing pressure within the dosing chamber 7 causes the floating plunger 6 to move from its initial position shown in Fig. 1a towards the blocking valve 50 and the discharge outlet 5. The moving plunger 6 pushes the liquid stored within the dosing chamber through the valve aperture or opening 51 and the discharge outlet 5. As the squeezing pressure is higher than the pressure within the dosing chamber 7 owing to the blocking valve being open, no liquid flows back into the container through the charge openings 9, 9' but through the discharge outlet 5.

An intermediate condition, in which the floating plunger 6 is on its way from the initial position towards a blocking position, is represented by Fig. 1b. Though not explicitly shown in Fig. 1b, it should be clear that the valve is opened in this operating condition.

Referring to Fig. 1c, the liquid dosing device 1 is shown in an operating condition, in which the floating plunger 6 has arrived at its blocking position. The complete content of the dosing chamber 7 has been drained through the valve opening 51 and the discharge outlet 5. As soon as a floating plunger 6 reaches the blocking position, the downstream rim 65 closes the valve 50 and the discharge outlet 5 from its upstream side by abutting the clamp ring 22, so that liquid is blocked from leaving the valve opening 51. The abutment between the floating plunger 6 and the clamp ring 22 suffices to avoid emission of any further liquid to the blocking valve 50.The floating plunger 6 further blocks the entry of liquid through the charge openings 9, 9' in the dosing chamber 7 or towards to the blocking valve 50, so that no liquid beyond the metered dose within the dosing chamber 7 can flow out of the discharge outlet 5.

If the squeezing pressure on the container is released, suction forces generated by reformation of the deformed container will reverse the pressure gradient, so that any liquid remaining at the valve closure member 52 is sucked back into the dosing chamber 7. The pressure acting on the upstream rim 67 of the floating plunger 6 is reversed so that the plunger begins to uncover the charge openings 9, 9'. Liquid remaining in the annulus chamber 69 may extert some initial buoyancy force on the floating plunger 6. As soon as the charge openings 9, 9' are partially opened, liquid streams back into the dosing chamber 7. The floating plunger 6 and its interior volume are dimensioned and adapted such that the buoyance force acting on the floating plunger 6 due to the liquid streaming into the dosing chamber 7 lifts the floating plunger 6 back into its initial position, shown in Fig. 1a.

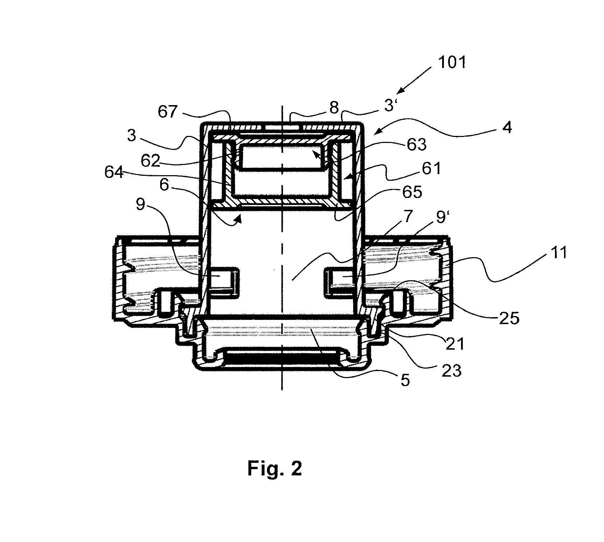

Referring to Fig. 2, a second embodiment of the liquid dosing device 101 according to the invention is shown. The device as shown is suitable for pasty or viscous liquids that provide a high surface tension so as to function as a blocking valve if contained in the the dosing chamber 7 of the device 101. In this specific embodiment, no particular blocking valve is shown but the diameter of the discharge outlet 5 may be adapted to provide together with the viscous consistency of specific liquids a certain pressure threshold before liquid leaves in the outlet 5. The working principle of this second embodiment is similar to the working principle of the first embodiment according to Figs. 1a to 1c. However, the pressure threshold is not provided by a flexible valve closure element 52 but by the liquid itself. As soon as the squeezing pressure overcomes a pressure threshold necessary to overcome a surface tension at the discharge outlet 5, the pasty liquid is discharged and a pressure gradient results between the dosing chamber 7 and the remaining container. The further course of operation is equal to the course of operation as described with respect to the first embodiment and Figs. 1a to 1c.

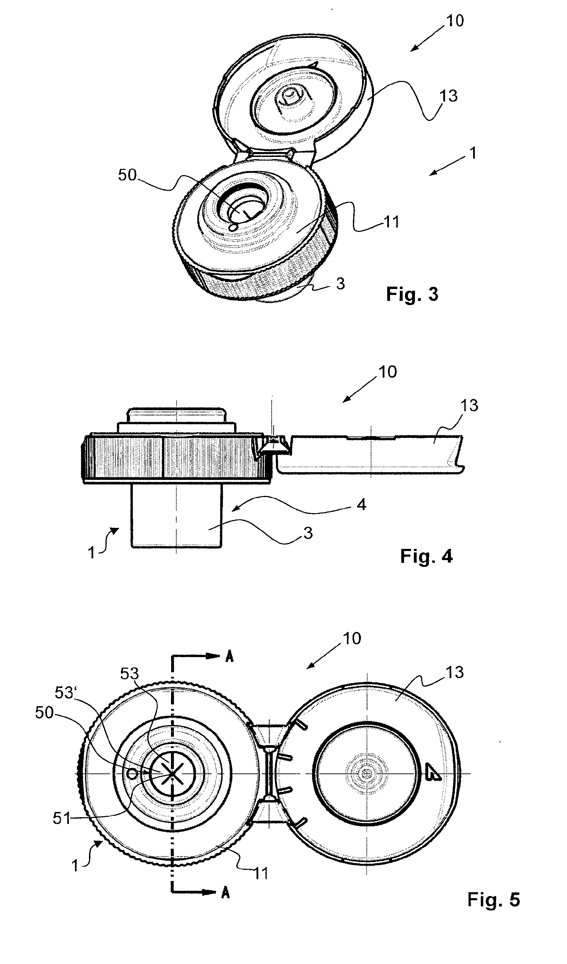

Referring to Figs. 3, 4 and 5, a liquid dosing device 1 according to the first embodiment is shown in connection with a container cap 10. The container cap 10 comprises a base portion 11 with a serrated outside to be mounted on a container. A lid 13 is hingedly connected to the base 11 of the cap 10. As can be seen best in Fig. 4, the cylindrical sidewall 3 of the liquid dosing device 1, 101 extends axially towards the interior of the container. Some details regarding the blocking valve 50 are best seen in Fig. 5. The blocking valve 5 comprises a valve closure element 51 which is realized by an elastic thin walled dome shaped element like a membrane. The membrane is made from a silicon elastomer and is glued or clamped sealingly within an interior circumference of the discharge outlet 5. The silicon membrane is slotted in an X-like fashion to define four elastic snap-over flaps 53, 53'. The snap-over flaps 53, 53' decrease in thickness from radially outward to radially inwards to provide a bending stiffness gradient adjusted with respect to the pressure gradient within the dosing chamber 7, when the container is squeezed.

The features disclosed in the above description, the figures and the claims can be significant for the realization of the invention in the different embodiments either alone or in combination.

### Reference numerals

- 1, 101: liquid dosing device
- 3: sidewall
- 3': base plate
- 4: hollow body
- 5: discharge outlet
- 6: floating plunger
- 7: dosing chamber
- 8: drive opening
- 9, 9': charge opening
- 10: cap
- 11: base
- 13: lid
- 21: mounting rim
- 22: clamp ring
- 23: groove
- 25: snap tap
- 50: blocking valve
- 51: aperture
- 52: valve closure member
- 59: clamp lip
- 53,53': flaps
- 61, 63: bushing elements
- 62, 64: body portions
- 65: downstream rim
- 67: upstream rim
- 69: chamber

## Claims

1. A liquid dosing device (1, 101) for dispensing a metered dose of liquid from a squeezable container, comprising:
- a discharge outlet (5);
- a dosing chamber (7) behind the discharge outlet (5), having at least one charge opening (9, 9') allowing a charging flow of liquid from said container into said dosing chamber (7) under influence of weight of liquid, and a drive opening (8) allowing a control flow of liquid from said container into said dosing chamber in response on a rise of pressure of;
- a floating plunger (6) moveably arranged in the dosing chamber (7) so as to advance upon said rise of pressure from a rest position in which under influence of a lifting force of buoyancy said floating plunger (6) closes said drive opening (8), into a blocking position in which said floating plunger (6) closes said at least one charge opening (9, 9'), and to push said liquid charged to said dosing chamber (7) to said discharge outlet (5); and
- a blocking valve (50) arranged between said discharge outlet (5) and said at least one charge opening (9, 9') in front of the dosing chamber (7).

2. A liquid dosing device (1, 101) according to claim 1, wherein said blocking valve (50) withstands a first pressure rise up to an opening pressure resistance and opens for a liquid passage if the liquid pressure exceeds said opening pressure resistance constituted by said blocking valve (50), preferably said opening pressure resistance being assessed to be larger than the liquid pressure acting on the blocking valve (50) if the container is in an upright position and the container is totally filled with liquid.

3. A liquid dosing device (1, 101) according to claim 1 or 2, wherein said liquid pressure exceeding said opening pressure resistance is achieved by particularly manually squeezing the container.

4. A liquid dosing device (1, 101) according to claim 2 or 3, wherein said blocking valve (50) is elastically biased to close its aperture (51).

5. A liquid dosing device (1, 101) according to one of the preceding claims, wherein the floating plunger (6) has a hollow body (3) formed by tow bushing-like elements telescopically inserted with each other to confine a tight volume.

6. A liquid dosing device (1, 101) according to one to the preceding claims, wherein the dosing chamber (7) has a cylindrical dosing interior, wherein the plunger (6) is adapted to the cylindric dimension of the dosing interior in that the plunger (6) has a clearance in radial direction with the cylindrical dosing interior of the dosing chamber, wherein particularly the plunger (6) comprises an upstream rim (67) and a downstream rim (65) interconnected by a preferably cylindrical body portion (62, 64), the downstream rim (65) being proximal said at least one charge opening (9, 9'), the upstream rim (67) being positioned proximal to the drive opening (8), wherein the upstream rim (67) is formed quadratically and the corner portions are curved according to the cylindricity of the cylindric dosing interior of the dosing chamber, while preferably the downstream rim (65) is thicker than the upstream rim (67) and/or is totally cylindrically formed in accordance to the cylindricity of the cylindric dosing interior of the dosing chamber (7), wherein particularly both rims (65, 67) extend radially from the interconnecting body portion (62, 64).

7. A liquid dosing device (1, 101) according to one of the preceding claims, wherein the dosing chamber is manufactured of one plastic element or comprises two particularly cylindrical bushing elements which are telescopically slidable within each other in order to adjust the measuring interior of the dosing chamber (7), wherein particularly a gasket is arranged between the overlapping outside and inside of the respective bushing element.

8. A liquid dosing device (1) according to one of the preceding claims, wherein said dosing chamber (20) is formed by a hollow body (3), particularly manufactured by plastic, which is removably attached to a cap (10) operably connectable to said container.

9. A liquid dosing device (1, 101) according to one of the preceding claims, wherein the discharge outlet (5) and/or the blocking valve (50) are arranged downstream the at least one charge opening such that a discharge flow of liquid reaches directly particularly along a predominant downstream flow direction the discharge outlet and/or the blocking valve (50).
